# EUROPÄISCHE PATENTSCHRIFT

(11) **EP 0 737 600 B1**
(45) Veröffentlichungstag und Bekanntmachung des Hinweises auf die Patenterteilung: **31.05.2000**
(21) Anmeldenummer: 96104972.3
(22) Anmeldetag: 28.03.1996
(51) Int. Cl.: B60Q 1/115

(54) **Vorrichtung zum Einstellen der Leuchtweite eines Kraftfahrzeugscheinwerfers**
Device for controlling vehicle light beam
Dispositif de réglage de la portée des phares d'un véhicule

(30) Priorität: 10.04.1995 DE 19513554
(43) Veröffentlichungstag der Anmeldung: 16.10.1996
(73) Patentinhaber: Bayerische Motoren Werke Aktiengesellschaft, 80788 München (DE)
(72) Erfinder: Kluge, Reinhold, 85399 Hallbergmoos (DE)

(56) Entgegenhaltungen:
- DE-U- 9 203 903
- FR-A- 2 117 083
- FR-A- 2 175 250

## Beschreibung

Die Erfindung bezieht sich auf eine Vorrichtung nach dem Oberbegriff des Patentanspruchs 1.

Bei der Verwendung eines Schrittmotors als Antriebsmotor kann das Problem eines Schrittverlustes auftreten. Dieses wirkt unmittelbar auf die Einstellung der Scheinwerfer-Neigung. Da die Einstellung mit höchster Präzision erfolgen muß, könnte ein Stellungsgeber Abhilfe schaffen. Dieser ist jedoch kostenintensiv und ebenfalls störanfällig. Zur Vermeidung von Schrittverlusten könnte man den Motorstrom erhöhen. Die damit erzielte Stellkrafterhöhung kann insbesondere bei höheren Temperaturen zu mechanischen Beeinträchtigungen des Scheinwerfers, des Motors und des Leuchtmittels führen.

In der DE 40 17 856 A1 wurde bereits vorgeschlagen, zur Vermeidung eines Schrittverlustes einen Referenzlauf bei Inbetriebnahme des Scheinwerfers durchzuführen. Dabei wird der Scheinwerfer auf Block gefahren und von dort aus die Neigung des Scheinwerfers auf den Sollwert eingestellt. Bei dieser Einstellung kann aber ebenfalls ein Schrittverlust auftreten und die Einstellung des Scheinwerfers dann nicht korrekt sein. Das Problem eines Schrittverlustes tritt besonders bei tiefen Betriebstemperaturen des Scheinwerfers auf. Derartige Temperaturen von beispielsweise -40°C liegen in manchen Ländern häufig vor. Der Einsatz geeigneter Schmierstoffe scheidet i.d.R. aus, da diese bei hohen Betriebstemperaturen des Scheinwerfers, wie sie bei längerem Betrieb des Scheinwerfers auftreten, Nachteile aufweisen. Bei derart hohen Betriebstemperaturen verdampfen die Schmierstoffe und schlagen sich im und am Scheinwerfer nieder. Eine Reinigung des Scheinwerfers ist, wenn überhaupt dann nur sehr eingeschränkt möglich.

Der Erfindung liegt die Aufgabe zugrunde, einen möglichst von Schrittverlusten und mechanischen Problemen freien Betrieb des Schrittmotors unter allen Betriebstemperaturen des Scheinwerfers sicherzustellen. Die Erfindung löst diese durch die kennzeichnenden Merkmale des Patentanspruchs 1.

Die Berücksichtigung der Betriebstemperatur des Scheinwerfers ermöglicht es, die Betätigungskraft weitgehend unabhängig von der Betriebstemperatur des Scheinwerfers innerhalb eines geringen Toleranzbereichs konstant zu halten. Dem liegt die Überlegung zugrunde, daß die Betätigungskraft abhängig von der Schrittfrequenz und der Betriebstemperatur des Scheinwerfers bzw. des Schrittmotors ist. Unter Schrittfrequenz ist dabei die Schrittzahlen pro Zeiteinheit, beispielsweise 100 bis 500 Schritte pro Sek. zu verstehen. Durch die Vergleichmäßigung der Betätigungskraft des Antriebsmotors wird mit großer Sicherheit die vorgegebene Schrittzahl tatsächlich auch bei tiefen Temperaturen durch den Schrittmotor ausgeführt und die Nachteile zu hoher Stellkräfte bei 20°C vermieden.

Die Bestimmung der Betriebstemperatur des Scheinwerfers bzw. des Schrittmotors selbst kann durch einen separaten Temperaturgeber am Ort des Scheinwerfers bzw. des Schrittmotors vorgenommen werden. Demgegenüber ergibt sich eine deutliche Verringerung des Aufwands, wenn die maßgebliche Betriebstemperatur indirekt bestimmt wird. Die Temperaturinformation kann aus dem Wert der Außentemperatur und/oder einem internen Temperaturwert eines Fahrzeugteils, z.B. des Kühlwassers einer Brennkraftmaschine gewonnen werden. Ergänzend oder alternativ kann auch die Einsatzzeit des Scheinwerfers selbst berücksichtigt werden.

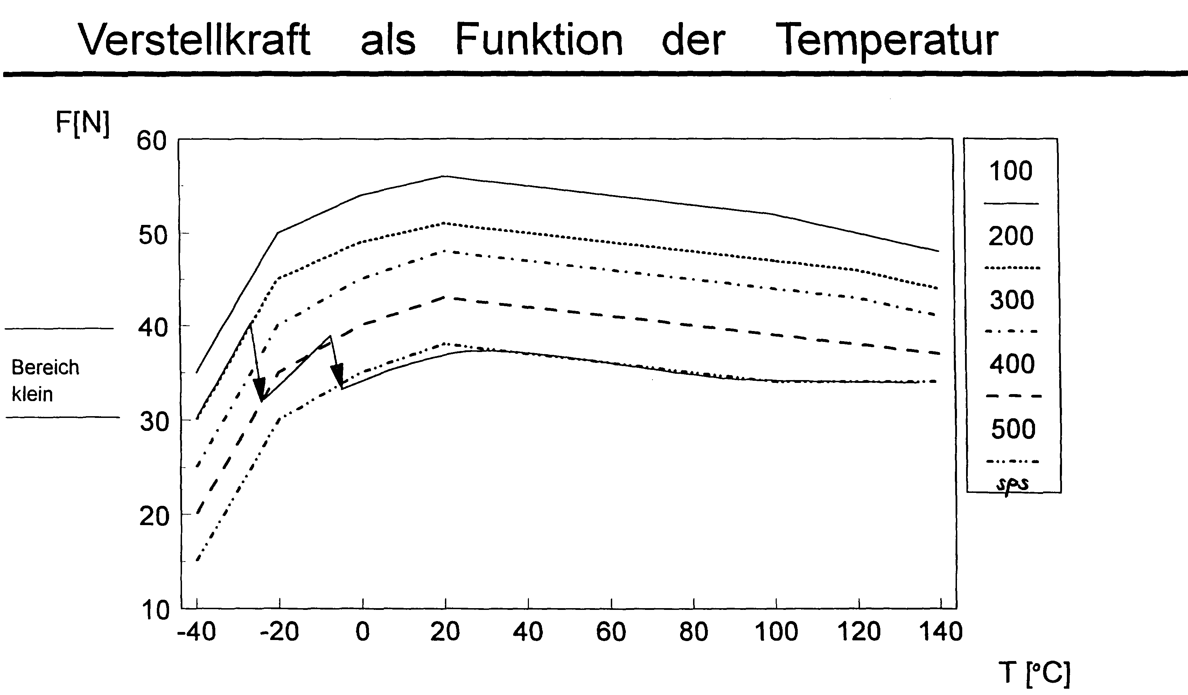

Die Erfindung ist anhand der Zeichnung weiter erläutert.

In der einzigen Figur ist der Zusammenhang zwischen der Betätigungskraft des Scheinwerfers und der Temperatur des Schrittmotors bzw. des Scheinwerfers für verschiedene Schrittfrequenzen wiedergegeben.

Der Einfachheit halber sei angenommen, daß der Schrittmotor (nicht dargestellt) und der Scheinwerfer (ebenfalls nicht dargestellt) annähernd dieselbe Temperatur besitzen. Es wird im folgenden nicht mehr zwischen den möglicherweise unterschiedlichen Temperaturen von Motor und Scheinwerfer unterschieden.

Die vorliegende Betriebstemperatur reicht beispielsweise von -40 bis 120°C. Die Verstellkraft ist für den Bereich von -40 bis +20°C um so niedriger, je niedriger die Betriebstemperatur einerseits und je höher die Schrittfrequenz andererseits ist. Eine niedrige Verstellkraft allgemein bedeutet, daß möglicherweise ausgegebene Schritte nicht mehr ausgeführt werden können, da die Verstellkraft nicht ausreicht, den Scheinwerfer tatsächlich zu bewegen. Dieser Fall ist besonders einsichtig, wenn man tiefe Temperaturen betrachtet. Bei diesen Temperaturen besitzt der Scheinwerfer eine ausgeprägte Schwergängigkeit. Damit aber besteht die Gefahr, daß eine vorgegebene Schrittzahl von beispielsweise 500 nicht vollständig ausgeführt wird und beispielsweise die Verstellung des Scheinwerfers tatsächlich einer Schrittzahl entspricht, die um die 10% unter der vorgegebenen Schrittzahl liegt. Damit aber ist die Neigung der Scheinwerfer nicht exakt. Dies gilt auch dann, wenn vorbereitend ein Referenzlauf "auf Block" durchgeführt wird. Das Hinzufügen von "Toleranzschritten" für die Erreichung der Sollposition ist angesichts der Serienstreuung kein gangbarer Weg, da der tatsächliche Umfang von Schrittverlusten nicht vorhersehbar ist.

Die Erfindung macht sich nun die gezeigte Temperaturabhängigkeit und Schrittfrequenzabhängigkeit der Verstellkraft des Schrittmotors zunutze. Bei besonders tiefen Temperaturen, hier -40°C, wird mit einer Schrittfrequenz (sps=Schritt pro Sekunde) von beispielsweise 200 sps gearbeitet. Bei höheren Temperaturen, beispielsweise -20°C bis 0°C, wird eine höhere Schrittfrequenz von beispielsweise 400 sps gewählt. Darüber bis hin zu 40°C besitzt die Schrittfrequenz ein Wert von 500 sps., über 40°C ist die Kraft weitgehend konstant.

Maßgeblich für die gewählte Schrittfrequenz ist dabei jeweils die Betriebstemperatur des Scheinwerfers bzw. des Schrittmotors, die vorzugsweise indirekt mit Hilfe von ohnehin im Kraftfahrzeug vorhandenen Temperaturgebern für Außentemperatur oder Fahrzeugkomponenten bestimmt wird. Dieser Temperaturwert wird an die Verstelleinrichtung des Scheinwerfers, weitergegeben und die Steuerung der Schrittfrequenz des Schrittmotors entsprechend durchgeführt.

Damit wird es möglich, ohne gesonderten Schmierstoff für den Scheinwerfer die Schwergängigkeit bei niedrigen Temperaturen zu kompensieren. Die über die jeweilige Betriebstemperatur wirksame Kraft läßt sich innerhalb eines kleinen Toleranzbereichs quasi linearisieren. Die erfindungsgemäße Maßnahme läßt sich ohne zusätzliche Mehrkosten für Hardware erreichen. Ein gesonderter Stellungsgeber für den Scheinwerfer ist entbehrlich, sofern zu definierten Zeitpunkten, z.B. beim Ausschalten des Scheinwerfers, eine Justierung auf die Ausgangslage vorgenommen wird.

## Patentansprüche

1. Vorrichtung zum Einstellen der Leuchtweite eines Kraftfahrzeug-Scheinwerfers mittels eines die Neigung des Scheinwerfers einstellenden Schrittmotors als Antriebsmotor, der entsprechend einem Neigungs-Sollwert gesteuert ist, dadurch gekennzeichnet, daß die Schrittfrequenz des Schrittmotors abhängig von der Scheinwerfer-Betriebstemperatur für tiefe Temperaturen kleiner als für höhere Temperaturen ist.

2. Vorrichtung nach Anspruch 1, dadurch gekennzeichnet, daß die Scheinwerfer-Betriebstemperatur indirekt aus der Außentemperatur und/oder der Temperatur eines Kraftfahrzeug-Bauteils und/oder der Betriebsdauer des Scheinwerfers ermittelt ist.

## Claims

1. A device for adjusting the illuminating range of a vehicle headlamp, using a drive motor in the form of a stepper motor which adjusts the inclination of the headlamp and is controlled in accordance with a set inclination, characterised in that the stepping frequency of the stepper motor, in dependence on the headlamp operating temperature, is smaller at low temperatures than at higher temperatures.

2. A device according to claim 1, characterised in that the headlamp operating temperature is obtained indirectly from the external temperature and/or the temperature of a vehicle component and/or the duration of operation of the headlamp.

## Revendications

1. Dispositif pour régler la portée d'un projecteur de véhicule automobile à l'aide d'un moteur pas à pas constituant un moteur d'entraînement pour l'inclinaison du projecteur, ce moteur étant commandé selon la valeur de consigne de l'inclinaison,
caractérisé en ce que
la fréquence de pas du moteur pas à pas dépend de la température de fonctionnement du projecteur en étant plus faible aux basses températures qu'aux températures élevées.

2. Dispositif selon la revendication 1,
caractérisé en ce que
la température de fonctionnement du projecteur se détermine indirectement à partir de la température extérieure et/ou de la température d'un composant du véhicule et/ou de la durée de fonctionnement du projecteur.
